# EUROPEAN PATENT APPLICATION

(11) **EP 2 492 996 A2**
(43) Date of publication of application: **29.08.2012**
(21) Application number: 12156148.4
(22) Date of filing: 20.02.2012
(51) Int. Cl.: H01M 4/505, H01M 4/525, H01M 4/36, H01M 4/04

(54) **Positive electrode active material, lithium ion storage device using the same, and manufacturing method thereof**

(30) Priority: 22.02.2011 JP 2011035438
(71) Applicant: Fuji Jukogyo Kabushiki Kaisha, Tokyo 160-8316 (JP)
(72) Inventor: Yanagita, Hideo, Tokyo 160-8316 (JP); Takimoto, Kazuki, Tokyo 160-8316 (JP)
(74) Representative: Sajda, Wolf E.

(57) **Abstract**

Provided are a positive electrode active material (31a), a lithium ion electric storage device (30) using the same, and a manufacturing method thereof. The positive electrode active material (31a) contains (1) lithium nickel cobalt manganese oxide, and at least one type of a lithium ion acceptance capacity adjustment compound selected from (2a) lithium vanadium composite oxide, vanadium oxide, lithium vanadium phosphate, and lithium vanadium fluorophosphate and (2b) Nb₂O₅, TiO₂, Li_{3/4}Ti_{5/3}O₄, WO₂, MoO₂, and Fe₂O₃. A lithium ion secondary battery (30) contains this positive electrode active material (31a).

## Description

### BACKGROUND OF THE INVENTION

### 1. Field of the Invention

The present invention relates to a lithium ion secondary battery pertaining to a positive electrode active material exhibiting a high degree of safety, a lithium ion electric storage device using the positive electrode active material, and a manufacturing method for a lithium ion electric storage device.

### 2. Description of the Related Art

Lithium ion secondary batteries, lithium ion capacitors, and so on are currently used as electric storage devices employed in electric vehicles, electric devices, and so on. As a result, a reduction in size, an improvement in performance, and an increase in continuous operation time can be achieved in the vehicle or electric device.

Demand exists for further improvement in the characteristics of a lithium ion electric storage device, such as an improvement in energy density, an increase in capacity, an improvement in a cycle characteristic, and an improvement in a capacity retention ratio. There is also a need for further improvement in the safety of the electric storage device in order to realize a stable power supply.

For example, in many lithium ion secondary batteries used in small electric devices or the like, LiCoO₂, LiCo_{l-x-y}M¹ₓM²_{y}O₂ (where M¹ and M² are metallic elements), which has a similar crystal structure to LiCoO₂, and so on are used as a positive electrode active material (also referred to as a positive electrode material), and with these materials, a high-power, high-capacity electric storage device is realized.

In a high-temperature, high-potential condition or the like, however, these materials react with an electrolyte solution such that oxygen is emitted, and as a result, heat is generated, possibly causing the electric storage device to catch fire.

It is therefore necessary to take into careful consideration the possibility of overcharging of the electric storage device and the possibility that an electric vehicle or the like installed with the electric storage device may be involved in an accident such that an external metal contacts the interior of the electric storage device, causing an internal short-circuit.

Safety verification by nail penetration test is implemented during battery development against a potential internal short-circuit caused when the electric storage device is pierced by an external metal. As regards the nail size and the used metal, various conditions are set in consideration of various situations.

This is because, if a short-circuit occurs between positive and negative electrodes of the lithium ion electric storage device under certain conditions, it is possible that the electric storage device will break or catch fire.

To improve safety, Japanese Unexamined Patent Application Publication JP-A-2-21559, for example, proposes a separator for a battery constituted by a polyethylene microporous film formed using two types of polyethylene having different specific molecular weights as raw materials.

With the separator according to JP-A-2-21559, a sharp decrease in ion conductivity occurs comparatively quickly in comparison with a conventional separator, even at low temperatures, and therefore a favorable current breaking function is exhibited.

In other words, in JP-A-2-21559, the ion conductivity can be reduced in advance at a temperature where an electric storage device is not yet in danger of catching fire or the like, and therefore the current can be blocked in advance, before fire breaks out or the like.

Further, JP-A-2002-216770 investigates the use of olivine Fe (LiFePO₄), which exhibits superior thermal stability even in a high-temperature and high-potential condition, and olivine Mn (LiMnPO₄) having a similar crystal structure thereto, as a positive electrode material for use in a nonaqueous electrolyte secondary battery.

In olivine Fe and olivine Mn, a great bonding strength is achieved between the phosphorous and the oxygen, and therefore these materials remain stable even at high temperatures such that the oxygen is unlikely to escape. As a result, the safety of the secondary battery is increased.

Furthermore, JP-A-2010-262939 describes a nonaqueous electrolyte secondary battery employing a separator that includes a heat resistant insulating layer formed by mixing oxidation resistant ceramic particles into a heat resistant resin in a predetermined proportion.

Furthermore, JP-A-2007-324073 describes a separator for a lithium secondary battery including a polymer microporous film layer and high heat resistant porous layers formed integrally on respective surfaces of the polymer microporous film layer, and the high heat resistant porous layers respectively contain a heat resistant polymer and a ceramic filler.

Moreover, JP-A-2004-127545 describes a lithium battery including a separator constituted by a polytetrafluoroethylene porous film and an unwoven fabric made of ceramic fiber or the like.

The separators described in JP-A-2010-262939, JP-A-2007-324073, and JP-A-2004-127545 are formed using materials that are unlikely to contract even during overcharging and overheating. Therefore, contraction is prevented, enabling effective prevention of a short-circuit between the positive and negative electrodes caused by separator contraction, as well as heat generation and fire in the cell resulting from the short-circuit.

In other words, JP-A-2-21559, on JP-A-2010-262939, JP-A-2007-324073, and JP-A-2004-127545 aim to prevent internal short-circuits in an electric storage device by improving the insulating property of the separator, reducing contraction, and so on, thereby enhancing the functions of the separator.

Further, JP-A-2002-216770 aims to avoid fire and high-temperature heat generation by selecting a positive electrode material from which a small amount of oxygen is emitted upon heat generation following a short-circuit.

However, when a short-circuit occurs in the electric storage devices of JP-A-2-21559, JP-A-2002-216770, JP-A-2010-262939, JP-A-2007-324073, and JP-A-2004-127545, a large amount of lithium ions are emitted instantaneously. The emitted lithium ions are deposited on a surface of the positive electrode in an active condition rather than being inserted into the positive electrode. When the lithium ions are deposited on the positive electrode surface, the lithium ions react vigorously with the electrolyte solution, and as a result, heat may be generated and fire may break out.

### SUMMARY OF THE INVENTION

The present invention has been designed in consideration of the circumstances described above, and an object thereof is to provide a positive electrode material used to constitute an electric storage device in which safety is enhanced by reducing the possibility of a reaction between lithium ions and an electrolyte solution during a short-circuit between positive and negative electrodes.

Another object of the present invention is to provide a lithium ion electric storage device that contains the positive electrode active material described above and therefore exhibits a high degree of safety while maintaining a conventional storage performance, and a manufacturing method for the electric storage device.

To achieve the objects described above, a first aspect of the present invention provides a positive electrode active material containing: (1) lithium nickel cobalt manganese oxide; and at least one type of a lithium ion acceptance capacity adjustment compound selected from (2a) lithium vanadium composite oxide, vanadium oxide, lithium vanadium phosphate, and lithium vanadium fluorophosphate, and (2b) Nb₂O₅, TiO₂, Lb_{3/4}Ti_{5/3}O₄, WO₂, MoO₂, and Fe₂O₃.

With the positive electrode active material constituted by the mixed materials described above, a lithium ion acceptance capacity can be increased, and therefore fire and overheating can be suppressed when a short-circuit occurs in an electric storage device using the positive electrode active material. As a result, safety can be enhanced.

Preferably, in the positive electrode active material, the lithium ion acceptance capacity adjustment compound of (2a) should be contained in an amount of 5 % to 95 % by weight based on a total weight of the positive electrode active material. Further preferably, in the positive electrode active material, the lithium ion acceptance capacity adjustment compound of (2b) should be contained in an amount of 5 % to 20 % by weight based on the total weight of the positive electrode active material.

The positive electrode active material containing the lithium ion acceptance capacity adjustment compound in the ranges described above exhibits a superior lithium ion acceptance capacity, and therefore the possibility of fire and overheating during a short-circuit is reduced dramatically.

The present invention provides a lithium ion electric storage device which includes the positive electrode active material described above.

The lithium ion electric storage device according to the present invention exhibits a superior degree of safety due to the low possibility of fire and overheating, as described above. Moreover, the lithium ion electric storage device exhibits superior typical electric storage device characteristics such as required power and durability.

Another aspect of the present invention provides a manufacturing method for a lithium ion electric storage device including the steps of: obtaining a positive electrode composite material by dispersing a mixture containing the positive electrode active material and a binder in a solvent; coating a positive electrode collector with the positive electrode composite material; and drying the positive electrode composite material.

According to this method, the lithium ion electric storage device exhibiting a superior degree of safety according to the present invention is manufactured.

The positive electrode active material and the lithium ion electric storage device containing the positive electrode active material according to the present invention include lithium nickel cobalt manganese oxide and a lithium ion acceptance capacity adjustment compound as the positive electrode active material.

The lithium ion acceptance capacity adjustment compound according to the present invention has a site where lithium ions can be accepted in a lower potential region than a potential region used by the lithium nickel cobalt manganese oxide.

Hence, even when an internal short-circuit or an external short-circuit occurs due to an internal factor such as overcharging or an external factor such as nail penetration or contact between a metal and a terminal such that a large amount of lithium ions are generated from the negative electrode, the lithium ions are inserted into the positive electrode active material in a stable condition.

Lithium ions are active when deposited on the surface of the positive electrode active material, and therefore the safety of an electric storage device in this condition is low. In the present invention, however, the amount of lithium ions deposited on the surface of the positive electrode active material during a short-circuit can be suppressed to an extremely low level.

Therefore, according to the present invention, a highly reliable lithium ion electric storage device in which the behavior of the lithium ions in the electric storage device is controlled significantly, in contrast to incidental measures taken conventionally to prevent short-circuits and overheating, can be obtained.

Hence, the positive electrode material of the present invention is extremely important for securing the safety of the lithium ion electric storage device, and therefore an electric storage device obtained using this positive electrode material is highly suitable for installation in means of transportation intended to travel safely using clean energy, such as an electric vehicle or a hybrid vehicle, and other electric devices.

### BRIEF DESCRIPTION OF THE DRAWING

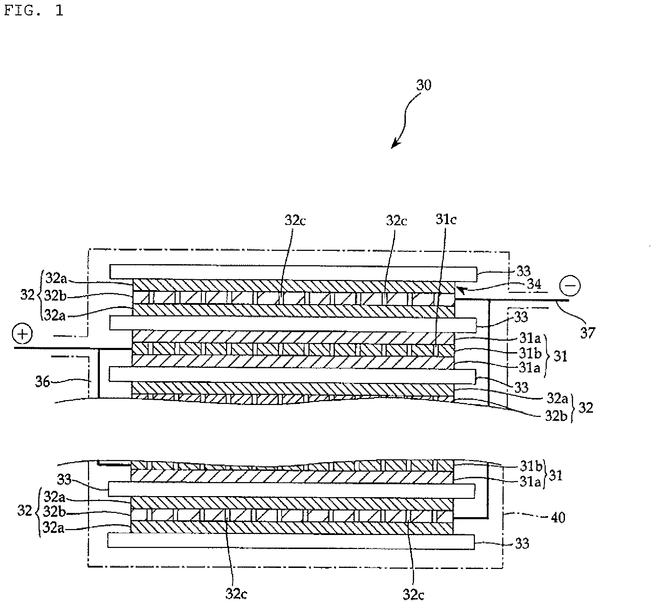

Fig. 1 is a schematic sectional view showing an embodiment of an electric storage device (a lithium ion secondary battery) according to the present invention.

### DESCRIPTION OF THE PREFERRED EMBODIMENT

An embodiment of the present invention will be described in detail below. The present invention is a technique relating to a lithium ion electric storage device, and mainly to a positive electrode forming the lithium ion electric storage device.

A lithium ion secondary battery is cited as the electric storage device, but the present invention may also be applied to a lithium ion capacitor or the like. As will be described below, there are no particular limitations on constitutions other than the positive electrode in the electric storage device according to the present invention, and as long as the effects of the present invention are not impaired, the present invention may be implemented in appropriate combination with a known conventional technique,

The electric storage device according to the present invention employs a positive electrode active material containing:
(1) lithium nickel cobalt manganese oxide; and
   at least one type of a lithium ion acceptance capacity adjustment compound selected from
(2a) lithium vanadium composite oxide, vanadium oxide, lithium vanadium phosphate, and lithium vanadium fluorophosphate, and
(2b) Nb₂O₅, TiO₂, Li_{3/4}Ti_{5/3}O₄, WO₂, MoO₂, and Fe₂O₃.

In other words, in the present invention, a mixture of (1) lithium nickel cobalt manganese oxide and (2) at least one type of a lithium ion acceptance capacity adjustment compound is used as the positive electrode active material.

Both the lithium nickel cobalt manganese oxide and the lithium ion acceptance capacity adjustment compound include a site for accepting lithium ions at a predetermined high potential (to be referred to for convenience as a high potential acceptance site), and during ordinary charging and discharging, lithium ions are inserted into and extracted from this high potential acceptance site. Note that in this specification, "ordinary charging and discharging" means normal charging and discharging originally intended in the lithium ion electric storage device according to the present invention.

In a conventional lithium ion electric storage device, the positive electrode active material is designed such that when the positive electrode is in a fully discharged condition, lithium ions are inserted into the lithium ion acceptance site (corresponding to a high potential acceptance site according to the present invention) of the positive electrode in a range of 80 % to 100 %.

Through repeated lithium ion insertion and extraction, ordinary charging and discharging are performed repeatedly. In other words, a particular surplus lithium ion insertion site is not prepared in the positive electrode.

When a short-circuit occurs in this type of conventional lithium ion electric storage device such that a large amount of lithium ions are emitted to the positive electrode instantaneously, the amount of lithium ions exceeds the capacity of the lithium ion insertion site in the positive electrode, and therefore active lithium ions (or lithium metal) are deposited onto the positive electrode surface instead of being inserted into the positive electrode.

Moreover, the lithium ions react with an electrolyte solution, and as a result, heat may be generated such that the electric storage device possibly catches fire.

To deal with this problem, the present inventors investigated the acceptance and release of lithium ions during ordinary charging and discharging, and a site where the lithium ions are stably accepted when a short-circuit or the like occurs.

As a result, the present inventors found that a favorable effect is obtained when a lithium ion acceptance capacity adjustment compound is intermixed in addition to lithium nickel cobalt manganese oxide.

The lithium ion acceptance capacity adjustment compound according to the present invention is a compound having not only a high potential acceptance site but also a site for accepting lithium ions at a low potential (to be referred to for convenience as a low potential acceptance site).

The lithium ion acceptance capacity adjustment compound (compound 2) includes the aforementioned compounds 2a and compounds 2b.

In the present invention, one or a plurality of compounds selected from the compounds 2a and the compounds 2b is used together with the lithium nickel cobalt manganese oxide (compound 1), whereby even when a large amount of lithium ions are generated during a short-circuit between the positive and negative electrodes or the like, the electric storage device containing these materials can be maintained in a safe condition and situations in which heat is generated or fire breaks out can be avoided.

In other words, a lithium ion electric storage device exhibiting a high degree of safety can be constructed, in which the large amount of lithium ions emitted during a short-circuit are taken into the low potential acceptance site of the lithium ion acceptance capacity adjustment compound such that the amount of lithium ions present in an active condition in the electrolyte and on the positive electrode surface decreases.

Note that similar effects are obtained both when one or a plurality of compounds selected from either one of the compounds 2a and the compounds 2b is used as the lithium ion acceptance capacity adjustment compound, and when a plurality of compounds including both the compounds 2a and the compounds 2b are used.

The positive electrode active material according to the present invention may be applied to a lithium ion capacitor and so on in addition to a lithium ion secondary battery.

A compounding ratio between the lithium nickel cobalt manganese oxide and the lithium ion acceptance capacity adjustment compound may be set freely according to a required performance of the electric storage device.

Here, at least one of the compounds 2a is preferably added as the lithium ion acceptance capacity adjustment compound in a proportion between 5 % and 95 % by weight, and more preferably between 10 % and 70 % by weight, relative to a total weight of the positive electrode active material (for example, a total weight of the lithium nickel cobalt manganese oxide and the lithium ion acceptance capacity adjustment compound).

When the proportion of the lithium ion acceptance capacity adjustment compound in the positive electrode active material falls below 5 % by weight of the total weight of the positive electrode active material, it becomes difficult to prevent fire during a short-circuit, and a desired lithium ion acceptance capacity adjustment effect cannot be exhibited.

Further, when the lithium ion acceptance capacity adjustment compound exceeds 95 % by weight based on the total weight of the positive electrode active material, a superior energy density and a superior cycle characteristic of the lithium nickel cobalt manganese oxide cannot be utilized.

When the compound 2a is maintained within a range of 10 % to 70 % by weight based on the total weight of the positive electrode active material, the lithium ion electric storage device is unlikely to catch fire, overheat, or the like even when a short-circuit occurs, and desired characteristics such as a superior charge/discharge cycle characteristic are stably obtained during ordinary charging and discharging.

Further, at least one type of lithium ion acceptance capacity adjustment compound selected from Nb₂O₅, TiO₂, Li_{3/4}Ti_{5/3}O₄, WO₂, MoO₂, and Fe₂O₃ is preferably added in a proportion between 5 % and 20 % by weight, and more preferably between 10 % and 15 % by weight, relative to the total weight of the positive electrode active material.

Similarly, in the case where Nb₂O₅, TiO₂, Li_{3/4}Ti_{5/3}O₄, WO₂, MoO₂, Fe₂O₃, or a mixture thereof (the compounds 2b) is used as the lithium ion acceptance capacity adjustment compound, when the proportion thereof falls below 5 % by weight, it becomes difficult to prevent fire due to overcharging or a short-circuit, and a desired lithium ion acceptance capacity adjustment effect cannot be exhibited.

Further, when the lithium ion acceptance capacity adjustment compound (the compounds 2b) exceeds 20 % by weight based on the total weight of the positive electrode active material, a reduction in energy density occurs since these compounds are not used during ordinary charging and discharging.

When one or more of the compounds 2b are used in a proportion between 10 % and 15 % by weight based on the total weight of the positive electrode active material, on the other hand, the lithium ion electric storage device is unlikely to catch fire, overheat, and so on even when a short-circuit occurs, and desired characteristics such as a large overall battery energy amount represented by the energy density are stably obtained during ordinary charging and discharging.

Furthermore, a mixture of the compounds 2a and the compounds 2b may be used as the lithium ion acceptance capacity adjustment compound, and in this case, the total weight of the lithium ion acceptance capacity adjustment compound (the total weight of the compounds 2a and the compounds 2b) relative to the total weight of the positive electrode active material preferably falls within a range of 5 % to 95 % by weight.

In this case, the percentage by weight of the compounds 2b is preferably set within a range of 5 % to 20 % by weight of the total weight of the positive electrode active material.

This is because the 2b lithium ion acceptance capacity adjustment compound does not have a lithium ion acceptance site in a voltage region of 2.5 V or more, which is used normally with lithium nickel cobalt manganese oxide, and therefore the total energy amount of the battery, represented by the energy density, decreases as the added amount thereof increases.

### Lithium nickel cobalt manganese oxide

The lithium nickel cobalt manganese oxide may be any compound having a high potential acceptance site, and is preferably an oxide expressed by a chemical formula LiₐNiₓCoyMn_{z}O₂ (wherein a, x, y, z > 0).

In the present invention, the high potential acceptance site is a site for inserting and extracting lithium ions in a lithium counter electrode potential range of 2.5 V to 5 V, whereas the low potential acceptance site is a site for inserting and extracting lithium ions in a lithium counter electrode potential range of 0 V to 2.5 V.

The lithium nickel cobalt manganese oxide according to the present invention may be manufactured using any method, and there are no particular limitations thereon. For example, the lithium nickel cobalt manganese oxide may be manufactured by mixing together an Ni-M¹ precursor synthesized using a solid reaction method, a coprecipitation method, a sol-gel method, or the like and a lithium compound at a desired stoichiometric mixture ratio and then baking the mixture or the like in an air atmosphere.

The lithium nickel cobalt manganese oxide is normally provided in a particle form obtained by pulverizing a baked component or the like. There are no particular limitations on a particle diameter thereof, and a material having a desired particle diameter may be used.

The particle diameter affects the stability and density of the compound, and therefore an average particle diameter of particles of the lithium nickel cobalt manganese oxide according to the present invention is preferably between 0.5 µm and 25 µm. When the average particle diameter is smaller than 0.5 µm, the stability may deteriorate, and when the average particle diameter exceeds 25 µm, the density may decrease, leading to a possible reduction in power.

When the average particle diameter is set in the above range, a high-stability, high-power electric storage device can be achieved. The average particle diameter of the lithium nickel cobalt manganese oxide is more preferably between 1 µm and 25 µm, and further more preferably between 1 µm and 10 µm.

Note that the average particle diameter of the particles is set to a value measured using a particle size distribution measurement device employing a laser diffractometry (a light scattering method).

### Lithium ion acceptance capacity adjustment compound

### (compounds 2a and compounds 2b)

The lithium ion acceptance capacity adjustment compound according to the present invention is a compound having a low potential acceptance site. The compound may include a low potential acceptance site alone, but, from the viewpoint of increasing the capacity of the positive electrode active material, the compound preferably also includes a high potential acceptance site.

The compounds 2a according to the present invention are lithium vanadium composite oxide, vanadium oxide, lithium vanadium phosphate, and lithium vanadium fluorophosphate.

These compounds include a low potential acceptance site having a site where lithium ions are inserted and extracted within a lithium counter electrode potential range of 0 V to 2.5 V, and a high potential acceptance site having a site where lithium ions are inserted and extracted within a range of 2.5 V to 5 V.

The compounds 2a according to the present invention are preferably contained in an amount of 5 % to 95 % by weight based on the total weight of the positive electrode active material.

In the present invention, the lithium vanadium composite oxide is a vanadium oxide containing lithium, and, in particular, is preferably a compound formed by mixing lithium into vanadium pentoxide, represented by LiₐV₂O₅. The lithium vanadium composite oxide is preferably contained in an amount of 5 % to 95 % by weight based on the total weight of the positive electrode active material.

When the lithium vanadium composite oxide is contained in an amount of at least 5 % by weight, a favorable effect is achieved on short-circuits caused by nail penetrating. The lithium vanadium composite oxide is further more preferably contained in an amount of 10 % to 95 % by weight.

When the lithium vanadium composite oxide is contained in an amount of at least 10 % by weight, a favorable effect is achieved on both short-circuits caused by nail penetrating and short-circuits caused by overcharging.

Furthermore, in the present invention, the vanadium oxide is vanadium oxide not containing lithium, and, in particular, is preferably a compound represented by V₂O₅ or V₃O₈. Similarly, the vanadium oxide is preferably contained in an amount of 5 % to 95 % by weight based on the total weight of the positive electrode active material.

When the vanadium oxide is contained in an amount of at least 5 % by weight, a favorable effect is achieved on short-circuits caused by nail penetrating. The vanadium oxide is further more preferably contained in an amount of 10 % to 95 % by weight. When the vanadium oxide is contained in an amount of at least 10 % by weight, a favorable effect is achieved on both short-circuits caused by nail penetrating and short-circuits caused by overcharging.

Further, in the present invention, the lithium vanadium phosphate is a compound containing phosphate (PO₄), in contrast to the aforementioned oxides, and, in particular, is preferably Li₃V₂(PO₄)₃, LiVOPO₄, or LiVPO₄. The lithium vanadium phosphate is preferably contained in an amount of 10 % to 95 % by weight based on the total weight of the positive electrode active material.

When the lithium vanadium phosphate is contained in an amount of at least 10 % by weight, a favorable effect is achieved on short-circuits caused by nail penetrating. The lithium vanadium phosphate is further more preferably contained in an amount of 25 % to 95 % by weight. When the lithium vanadium phosphate is contained in an amount of at least 25 % by weight, a favorable effect is achieved on both short-circuits caused by nail penetrating and short-circuits caused by overcharging.

Furthermore, in the present invention, the lithium vanadium fluorophosphate is a compound formed by bonding fluorine to lithium vanadium phosphate, and, in particular, is preferably LiVPO₄F. The lithium vanadium fluorophosphate is preferably contained in an amount of 25 % to 95 % by weight based on the total weight of the positive electrode active material.

When the lithium vanadium fluorophosphate is contained in an amount of at least 25 % by weight, a favorable effect is achieved on both short-circuits caused by nail penetrating and short-circuits caused by overcharging.

Further, by mixing at least 5 % by weight of the compounds 2a into the positive electrode active material, a temperature increase is suppressed during a short-circuit.

Although specific compounds are cited as examples in the above description of the respective compounds, compounds formed by adding a small amount of a different element to the compounds or replacing a component of the compounds with a different element are also included within the scope of the present invention. This is because similar effects to those of the present invention are obtained as long as the compounds 2a have a low potential acceptance site.

The compounds 2a may be manufactured using any method, and there are no particular limitations thereon. For example, the compounds may be manufactured through hydrothermal synthesis, for example, by mixing, reacting, baking, and otherwise processing a lithium source such as LiOH or LiOH/H₂O, a vanadium source such as V₂O₅ or V₂O₃, a phosphate source such as NH₄H₂PO₄ or (NH₄)₂HPO₄, a source of halogen gas, halide, or the like, and so on. The resulting products are normally provided in a particle form obtained by pulverizing a baked component or the like.

Further, among the compounds 2a, Li₃V₂(PO₄)₃, LiVOPO₄, and LiVPO₄ exhibit low electron conductivity by themselves, and are therefore preferably provided in the form of particles with surfaces thereof being coated with conductive carbon. Thus, the electron conductivity of the lithium ion acceptance capacity adjustment compound can be improved.

The conductive carbon coating may be applied using a normal method. For example, a conductive carbon coating can be formed on the surface of the lithium ion acceptance capacity adjustment compound by mixing citric acid, ascorbic acid, polyethylene glycol, sucrose, methanol, propene, carbon black, Ketjen black, or the like into the lithium ion acceptance capacity adjustment compound as a carbon coating material during the reaction process or the baking process of the compound manufacturing process.

There are no particular limitations on the particle size of the compounds 2a, and compounds having a desired particle size may be used. However, the particle size affects the stability and density of the lithium ion acceptance capacity adjustment compound.

In order to adjusting the stability and density of the compounds to optimum levels, examples of a D₅₀ in a particle size distribution of secondary particles are illustrated below for several types of compounds.

For example, the D₅₀ of Li_{0.33}V₂O₅ is preferably between 0,1 µm and 25 µm, more preferably between 1 µm and 10 µm, and further more preferably between 3 µm and 7 µm.

The D₅₀ of V₃O₈ is preferably between 0.1 µm and 25 µm, more preferably between 1 µm and 10 µm, and further more preferably between 3 µm and 7 µm.

The D₅₀ of Li₃V₂(PO₄)₃ is preferably between 0.1 µm and 25 µm, more preferably between 1 µm and 10 µm, and further more preferably between 3 µm and 7 µm.

The D₅₀ of LiVOPO₄ is preferably between 0.1 µm and 25 µm, more preferably between 1 µm and 10 µm, and further more preferably between 3 µm and 7 µm.

The D₅₀ of LiVOPO₄F is preferably between 0,1 µm and 25 µm, more preferably between 1 µm and 10 µm, and further more preferably between 3 µm and 7 µm.

The compounds 2b of the present invention are Nb₂O₅, TiO₂, Li_{3/4}Ti_{5/3}O₄, WO₂, MoO₂, and Fe₂O₃. These compounds include a low potential acceptance site having a site where lithium ions are inserted and extracted within a lithium counter electrode potential range of 0 V to 2.5 V.

Nb₂O₅, Li_{3/4}Ti_{5/3}O₄, and WO₂ are preferably contained in an amount of at least 10 % by weight based on the total weight of the positive electrode active material. When these compounds are contained in an amount of at least 10 % by weight, a favorable effect is achieved on short-circuits caused by nail penetrating.

More preferably, the Nb₂O₅, Li_{3/4}Ti_{5/3}O₄, and WO₂ are contained in an amount of at least 20 % by weight. When these compounds are contained in an amount of at least 20 % by weight, a favorable effect is achieved on both short-circuits caused by nail penetrating and short-circuits caused by overcharging.

Nb₂O₅, Li_{3/4}Ti_{5/3}O₄, and WO₂ may be intermixed in a proportion of more than 20 % by weight. However, when the mixing amount increases, the capacity of the positive electrode active material decreases. Therefore, these compounds should be mixed in appropriate amounts, with safety being taken into account.

TiO₂ is preferably contained in an amount of at least 10 % by weight based on the total weight of the positive electrode active material. When TiO₂ is contained in an amount of at least 10 % by weight, a favorable effect is achieved on both short-circuits caused by nail penetrating and short-circuits caused by overcharging.

TiO₂ may be intermixed in a proportion of more than 20 % by weight. However, when the mixing amount increases, the capacity of the positive electrode active material decreases. Therefore TiO₂ should be mixed in an appropriate amount, with safety being taken into account.

Fe₂O₃ is preferably contained in an amount of at least 5 % by weight based on the total weight of the positive electrode active material. When Fe₂O₃ is contained in an amount of at least 5 % by weight, a favorable effect is achieved on short-circuits caused by nail penetrating.

More preferably, Fe₂O₃ is contained in an amount of at least 10 % by weight. When Fe₂O₃ is contained in an amount of at least 10 % by weight, a favorable effect is achieved on both short-circuits caused by nail penetrating and short-circuits caused by overcharging.

Fe₂O₃ may be intermixed in a proportion of more than 20 % by weight. However, when the mixing amount increases, the capacity of the positive electrode active material decreases. Therefore Fe₂O₃ should be mixed in an appropriate amount, with safety being taken into account.

Further, by mixing at least 5 % by weight of the compounds 2b into the positive electrode active material, a temperature increase is suppressed during a short-circuit.

Similarly to the compounds 2a, compounds formed by adding a small amount of a different element to these compounds are also included within the scope of the present invention. This is because similar effects to those of the present invention are obtained as long as a similar low potential acceptance site is provided.

Further, there are no particular limitations on the manufacturing method of Nb₂O₅, TiO₂, Li_{3/4}Ti_{5/3}O₄, WO₂, MoO₂, and Fe₂O₃, and commercially available products may be used. There are also no particular limitations on the particle diameter of Nb₂O₅, TiO₂, Li_{3/4}Ti_{5/3}O₄, WO₂, MoO₂, and Fe₂O₃, although the particle diameter is typically set within the following range, with the stability and density of the compounds being taken into consideration.

For example, the D₅₀ of Nb₂O₅ is preferably between 0.1 µm and 25 µm, more preferably between 1 µm and 10 µm, and further more preferably between 3 µm and 7 µm.

The D₅₀ of TiO₂ is preferably between 0.1 µm and 25 µm, more preferably between 1 µm and 10 µm, and further more preferably between 3 µm and 7 µm.

The D₅₀ of Li_{3/4}Ti_{5/3}O₄ is preferably between 0.1 µm and 25 µm, more preferably between 1 µm and 10 µm, and further more preferably between 3 µm and 7 µm.

The D₅₀ of WO₂ is preferably between 0.1 µm and 25 µm, more preferably between 1 µm and 10 µm, and even further preferably between 3 µm and 7 µm.

The D₅₀ of MoO₂ is preferably between 0.1 µm and 25 µm, more preferably between 1 µm and 10 µm, and further more preferably between 3 µm and 7 µm.

The D₅₀ of Fe₂O₃ is preferably between 0.1 µm and 25 µm, more preferably between 1 µm and 10 µm, and further more preferably between 3 µm and 7 µm.

Note that the D₅₀ of the particle size distribution of secondary particles, described above, is set to a value measured using a particle size distribution measurement device employing a laser analysis method (a light scattering method).

The positive electrode active material according to the present invention is obtained by mixing at least one lithium ion acceptance capacity adjustment compound (from the compounds 2a), or at least one lithium ion acceptance capacity adjustment compound (from the compounds 2b), that is, Nb₂O₅, TiO₂, Li_{3/4}Ti_{5/3}O₄, WO₂, MoO₂, and Fe₂O₃, or a mixture of at least one of each of the compounds 2a and 2b, with the compound 1.

When the positive electrode active material is formed from a mixture, the selected compounds may be mixed together in advance, and each compound may be mixed directly with a conduction assistant and a binder or the like. A commercially available stirrer such as a Planetary Despa Mixer is used to mix the mixture.

### Electric storage device

The electric storage device according to the present invention may be a lithium ion secondary battery or the like that includes, in addition to the above-described positive electrode containing the positive electrode active material, a negative electrode and an electrolyte layer or a nonaqueous electrolyte solution formed by dissolving an electrolyte in a solvent.

Note that the electric storage device according to the present invention is not limited to a lithium ion secondary battery, and includes any electric storage device having a function for doping and de-doping lithium ions to and from a positive electrode, such as a capacitor.

An embodiment of the electric storage device according to the present invention will be described below with reference to the drawing, using a lithium ion secondary battery as an example.

Fig. 1 is a schematic sectional view showing an embodiment of the lithium ion secondary battery according to the present invention. As shown in the drawing, a lithium ion secondary battery 30 includes an electrode unit 34 formed by laminating a plurality of positive electrodes 31 and negative electrodes 32 alternately via separators 33.

For example, the positive electrode 31 and the negative electrode 32 may each be provided in 5 to 30 layers. Alternatively, depending on an intended purpose of the electric storage device, the positive electrode 31 and the negative electrode 32 may each be provided in a single layer.

The positive electrode 31 is formed by providing a positive electrode composite material layer 31a on either surface of a positive electrode collector 31b. Similarly, the negative electrode 32 is formed by providing a negative electrode composite material layer 32a on either surface of a negative electrode collector 32b.

Positive electrode collectors 31 b are connected to each other via a positive electrode terminal 36, and the negative electrode collectors 32b are connected to each other via a negative electrode terminal 37.

The lithium ion secondary battery 30 is formed by packaging the electrode unit 34 described above in a laminate film 40 and charging an electrolyte solution into an interior thereof.

Further, the positive electrode terminal 36 and the negative electrode terminal 37 provided on the respective collectors extend from the laminate film 40 to the outside so that the lithium ion secondary battery 30 can be connected externally.

When a compound not containing a lithium element, such as V₃O₈, Nb₂O₅, TiO₂, Li_{3/4}Ti_{5/3}O₄, WO₂, MoO₂, or Fe₂O₃, is used as the lithium ion adjustment compound, a lithium electrode may be provided above and below, or either above or below, the electrode unit 34 to ensure that the amount of lithium ions in the positive electrode 31 and the negative electrode 32 of the lithium ion secondary battery 30 is sufficient.

In this case, lithium ions can be predoped to the positive electrode 31 and the negative electrode 32 smoothly from the lithium electrode by providing through holes 31c and 32c in the positive electrode collector 31b and the negative electrode collector 32b.

### Positive electrode

The positive electrode according to the present invention is manufactured using the above-described positive electrode active material according to the present invention. Other positive electrode materials are ones used to manufacture a typical positive electrode. More specifically, the positive electrode is manufactured as follows, for example.

The positive electrode materials including the positive electrode active material according to the present invention, a binder, and, if necessary, a conduction assistant and the like, are dispersed in a solvent to form a positive electrode composite material.

A positive electrode composite material layer is then formed by coating the positive electrode collector with the positive electrode composite material and then drying the positive electrode composite material.

Crimping such as pressing may be performed after the drying process. In so doing, the positive electrode composite material layer is adhered evenly and firmly to the collector. A layer thickness of the positive electrode composite material layer is typically between 10 µm and 200 µm, and preferably between 20 µm and 100 µm.

Examples of the binder employed in the positive electrode composite material include a fluorine-containing resin such as polyvinylidene fluoride, an acrylic binder, a rubber-based binder such as SBR, a thermoplastic resin such as polypropylene and polyethylene, and carboxymethyl cellulose.

The binder is preferably a fluorine-containing resin or a thermoplastic resin, both of which exhibit chemical and electrochemical stability relative to the nonaqueous electrolyte solution employed in the electric storage device according to the present invention, and, in particular, is preferably a fluorine-containing resin.

Examples of the fluorine-containing resin include, in addition to polyvinylidene fluoride, polytetrafluoroethylene, vinylidene fluoride-ethylene trifluoride copolymer, ethylene-ethylene tetrafluoride copolymer, and propylene-ethylene tetrafluoride copolymer. A blending amount of the binder is preferably between 0.5 % and 20 % by weight of the positive electrode active material described above.

Examples of the conduction assistant (conductive particles, for example) employed in the positive electrode composite material include conductive carbon such as Ketjen black, a metal such as copper, iron, silver, nickel, palladium, gold, platinum, indium, and tungsten, and a conductive metal oxide such as indium oxide and tin oxide. A blending amount of the conduction assistant is preferably between 0.1 % and 30 % by weight of the positive electrode active material described above.

Examples of the solvent employed in the positive electrode composite material include water, isopropyl alcohol, N-methyl pyrrolidone, and dimethylformamide.

A surface of the positive electrode collector that contacts the positive electrode composite material layer is formed from a conductive substrate exhibiting conductivity, for example a conductive substrate formed from a conductive material such as a metal, a conductive metal oxide, and conductive carbon, or a non-conductive substrate main body covered with one of these conductive materials.

Preferable examples of the conductive material include copper, gold, aluminum, or an alloy thereof, and conductive carbon. The material of the positive electrode collector may be provided in the form of expanded metal, punching metal, foil, mesh, a foamed body, and so on,

When a porous body is used, there are no particular limitations on the shape, number, and so on of the through holes, and these elements may be set appropriately within a range that does not impair lithium ion movement.

### Negative electrode

There are no particular limitations on the negative electrode according to the present invention, and the negative electrode may be manufactured using typical materials. For example, a negative electrode composite material layer is formed by applying a negative electrode composite material, which is obtained by dispersing a mixture containing a typically used negative electrode active material and a binder in a solvent, onto the negative electrode collector and then performing drying and the like on the resulting component.

Note that the employed binder, solvent, and collector may be similar to those used for the above-described positive electrode, described above.

Examples of the negative electrode active material include a lithium-based metallic material, an intermetallic compound material of a metal and lithium metal, a lithium compound, and a lithium-intercalated carbon material.

Examples of the lithium-based metallic material include metallic lithium and a lithium alloy (for example, an Li-Al compound). Examples of the intermetallic compound material of a metal and lithium metal include an intermetallic compound containing tin, silicon, or the like. The lithium compound is lithium nitride, for example.

Further, examples of the lithium-intercalated carbon materials include carbon-based materials such as graphite and a non-graphitizable carbon material, and a polyacene material. The polyacene material is insoluble and infusible PAS having a polyacene-based skeleton or the like, for example.

Note that all of these lithium-intercalated carbon materials are substances to which lithium ions can be doped reversibly. A layer thickness of the negative electrode composite material layer is typically between 10 µm and 200 µm, and preferably between 20 µm and 100 µm.

In the present invention, doping means occlusion, support, adsorption, insertion, and so on, and indicates a condition in which lithium ions, anions, and so on enter the positive electrode active material and negative electrode active material,

Further, dedoping means emission, extraction, and so on, and indicates a condition in which the lithium ions, anions, and so on are released from the positive electrode active material and negative electrode active material.

Accordingly, "predoping" of the lithium ions means that lithium ions are doped in advance to the positive electrode active material or the negative electrode active material of the electric storage device prior to shipping as a product.

### Nonaqueous electrolyte solution

There are no particular limitations on the nonaqueous electrolyte solution according to the present invention, and ordinary materials may be used. From the viewpoint of ensuring that electrolysis does not occur even at high voltages and that the lithium ions can be present with stability, for example, general purpose lithium salt may be used as an electrolyte and dissolved in an organic solvent for use as an electrolyte solution.

Examples of the electrolyte include CF₃SO₃Li, C₄F₉SO₈Li, (CF₃SO₂)₂NLi, (CF₃SO₂)₃CLi, LiBF₄, LiPF₆, LiClO₄, and a mixture of two or more of these substances.

Examples of the organic solvent include propylene carbonate, ethylene carbonate, butylene carbonate, dimethyl carbonate, diethyl carbonate, ethylmethyl carbonate, vinyl carbonate, trifluoromethylpropylene carbonate, 1, 2-dimetoxyethane, 1, 2-dietoxyethane, γ-butyrolactone, tetrahydrofuran, 1, 3-dioxolane, 4-methyl-1, 3-dioxolane, diethylether, sulfolane, methylsulfolane, acetonitrile, propionitrile, and a mixed solvent containing two or more of these substances.

An electrolyte concentration of the nonaqueous electrolyte solution is preferably between 0.1 mol/L and 5.0 mol/L, and more preferably between 0.5 mol/L and 3.0 mol/L.

The nonaqueous electrolyte solution may be a liquid, or may be formed as a solid electrolyte or a polymer gel electrolyte by intermixing a plasticizer, a polymer or the like.

### Separator

The separator 33 used in the embodiment shown in Fig. 1 is preferably constituted of a porous body or the like that does not possess electron conductivity, has communicating pores, and is durable against the electrolyte solution, the positive electrode active material, and the negative electrode active material.

Examples of this type of porous body include woven fabric, non-woven fabric, a synthetic resin microporous film, glass fiber. A synthetic resin microporous film can be used favorably, and a polyolefin microporous film made of polyethylene, polypropylene, or similar is particularly preferable in terms of thickness, film strength, and film resistance.

A manufacturing method for the electric storage device according to the present invention should include a step for forming the above-described positive electrode composite material layer of the positive electrode. Other steps may be similar to ones in a ordinary manufacturing method.

Hence, according to the present invention, by constructing the lithium ion electric storage device using a composition containing the compound shown in Formula (I) and the lithium ion acceptance capacity adjustment compound as the positive electrode active material, lithium ions are inserted into the positive electrode active material in a stable condition even when generated in a large amount due to overcharging or a short-circuit.

Therefore, short-circuits and overheating are unlikely to occur in the lithium ion electric storage device according to the present invention, enabling a dramatic improvement in safety.

### EXAMPLES

The present invention will be described in further detail below using examples. Note that the present invention is not limited to the following examples. Unless otherwise indicated, "part" is assumed to mean "part by weight" and "%" is assumed to mean "% by weight".

### Examples 1 to 10

### (1) Manufacture of positive electrode

### (1-1) Positive electrode active material

A mixed material forming the positive electrode active material was manufactured using LiNi_{1/3}Co_{1/3}Mn_{1/3}O₂ (lithium nickel cobalt manganese oxide (also referred to simply as an oxide hereafter)) and a lithium ion acceptance capacity adjustment compound (also referred to simply as an adjustment compound hereafter) (Li_{0.33}V₂O₅, V₃O₈, Li₃V₂(PO₄)₃, LiVOPO₄, LiVPO₄F, Nb₂O₅, TiO₂, Li_{3/4}Ti_{5/3}O₄, WO₂, Fe₂O₃) shown in Table 1, to be described below. A mixing ratio of the materials was adjusted such that the adjustment compound was provided in the proportions shown in Table 1 relative to the total weight of the oxide and the adjustment compound.

### (1-2) Positive electrode composite material

A positive electrode composite material having the following composition was obtained.

| | |
|---|---|
| Positive electrode active material (the aforementioned mixed material) | 100 parts |
| Binder (polyvinylidene fluoride (PVdF)) | 5 parts |
| Conduction assistant (conductive carbon black) | 5 parts |
| Solvent (N-methyl 2-pyrrolidinone (NMP)) | 100 parts |

By mixing the above materials using a Planetary Despa, 45 types of positive electrode composite materials having different adjustment compound mixing ratios were prepared (Table 1).

### (1-3) Formation of Positive electrode

Both surfaces of the positive electrode collector (aluminum foil (thickness 30 µm)) were coated with any one of the positive electrode composite materials at a speed of 2 m/minute using a roll to roll continuous coating device, whereupon the resulting component was dried at a drying temperature of 100°C.

Thus, positive electrode composite material layers (each having a layer thickness of 80 µm) were formed on the positive electrode collector. Positive electrodes were then formed by cutting the component to 50 mm x 50 mm (not including an uncoated projecting tab part).

### (2) Manufacture of negative electrode

### (2-1) Negative electrode composite material

A negative electrode composite material having the following composition was obtained.

| | |
|---|---|
| Negative electrode active material (graphite) | 95 parts |
| Binder (PVdF) | 5 parts |
| Solvent (NMP) | 150 parts |

By mixing the above materials using a Planetary Despa, the negative electrode composite material was prepared.

### (2-2) Formation of negative electrode

Both surfaces of the negative electrode collector (copper foil (thickness 10 µm)) were coated with the negative electrode composite material using a roll to roll continuous coating device, whereupon the resulting component was dried such that a negative electrode composite material layer (layer thickness 60 µm) was formed on the negative electrode collector. The negative electrode was then formed by cutting the component to 52 mm x 52 mm (not including an uncoated projecting tab part).

### (3) Manufacture of battery

Five positive electrodes constituted by positive electrode active materials having identical materials in identical proportions and five negative electrodes were laminated alternately via polyethylene separators each having a film thickness of 25 µm.

In a resultant laminated body-shaped electrode unit, an aluminum lead was welded to the uncoated projecting tab part of each positive electrode collector, and a nickel lead was welded to each negative electrode collector. The positive electrodes and the negative electrodes were coupled via the leads, thereby forming a positive electrode terminal and a negative electrode terminal.

The resultant electrode laminated body was sealed into an aluminum laminate covering material, whereupon the positive electrode terminal and the negative electrode terminal were drawn to the outside of the covering material. The laminated body was then fused tightly, leaving open an electrolyte solution filling port.

An electrolyte solution (manufactured by adding 1.5 M LiPF₆ to a mixed solvent constituted by 1 part by weight of ethylene carbonate (EC), 3 parts by weight of diethyl carbonate (DEC), and 1 % by weight of vinylene carbonate (VC) relative to the total weight of the EC and DEC) was injected through the electrolyte solution filling port, whereupon the electrolyte solution was caused to penetrate to the interior of the electrodes by vacuum impregnation,

The covering material was then vacuum-sealed, whereby the lithium ion secondary battery according to the present invention was manufactured.

### Comparative Example 1

A comparative lithium ion secondary battery was manufactured by repeating similar operations to those of Examples 1 to 10, except that the positive electrode active materials (100 parts) constituted by the mixed materials of Examples 1 to 10 were replaced by a positive electrode active material (100 parts) constituted only by LiNi_{1/3}Co_{1/3}Mn_{1/3}O₂.

### Overcharging test

The lithium ion secondary batteries according to Examples 1 to 10 and Comparative Example 1 were connected to a circuit having a charger (a constant voltage power supply, manufactured by Kikusui Electronics Corp.) and an ammeter/voltmeter (a shunt resistor manufactured by Yokogawa Electric Corporation + a data logger manufactured by Keyence Corporation).

The lithium ion secondary batteries were then charged for 50 minutes using a direct current corresponding to 3C in a current rate conversion. Based on an integrated overall current capacity value flowing into the battery, this charging operation corresponds to 250 % overcharging,

The appearance of the lithium ion secondary batteries charged in the above-described manner was observed visually. Fire was observed following the elapse of 1 second to 10 minutes after the charging was stopped, depending on the type of the secondary battery. The batteries that did not catch fire were observed continuously for further 24 hours but still did not catch fire.

In some of these batteries, the aluminum laminate split after 24 hours, but since the active material in the interior of these batteries was in a deactivated condition in an atmospheric environment, it was determined that there was no danger of the batteries catching fire over time. In some batteries where the aluminum laminate did not split, fire still did not break out over time. Observation results are shown in Table 1.

### Nail penetration test

The lithium ion secondary batteries according to Examples 1 to 10 and Comparative Example 1 were charged (fully charged) to 4.2 V using a charging/discharging device manufactured by Aska Electronic Co., Ltd.

An iron nail having a nail diameter of φ 5 mm was prepared, and the lithium ion secondary battery was placed on a metallic substrate. A central portion of the lithium ion secondary battery was pierced by the nail in a lamination direction of the positive electrodes and negative electrodes at a nail penetrating speed of 15 mm/second so as to penetrate the aluminum laminate.

Fire was observed following the elapse of 1 second to 10 minutes after the piercing, depending on the type of the lithium ion secondary battery. Observation results are shown in Table 1.

### Temperature variation during external short-circuit

The lithium ion secondary batteries according to Examples 1 to 10 and Comparative Example 1 were connected to a charging/discharging device manufactured by Aska Electronic Co., Ltd.

Each secondary battery was charged to 4,2 V (fully charged) and then short-circuited by an external resistor of 0.5 mΩ at room temperature. The temperature of an outer surface of the secondary battery main body at the time of the short-circuit was measured using a thermocouple and a data logger (manufactured by Keyence). The thermocouple was disposed on a central upper surface of an outside planar portion of the battery and fixed by heat-resistant glass cloth tape.

The temperature during an external short-circuit rose in correlation with the lithium ion acceptance of the electrode. Specifically, lithium is accepted into the electrode with greater stability as the magnitude of the temperature increase is smaller. Measurement results are shown in Table 1,

**Table 1**

| | Positive electrode active material (100 %) | | | Overcharging test | Nail penetration test | Outside surface temperature at short-circuit (°C) |
|---|---|---|---|---|---|---|
| | Lithium metal, compound oxide | Lithium ion acceptance capacity adjustment compound | Usage ratio (%) | | | |
| Example 1-a | LiNil_{1/3}CO_{1/3}Mn_{1/3}O₂ | Li_{0.33}V₂O₅ | 5 | X | O | 62 |
| Example 1-b | | | 10 | O | O | 58 |
| Example 1-c | | | 25 | O | O | 52 |
| Example 1-d | | | 50 | O | O | 46 |
| Example 1-e | | | 75 | O | O | 43 |
| Example 1-f | | | 95 | O | O | 38 |
| Example 2-a | LiNil_{1/3}Co_{1/3}Mn_{1/3}O₂ | V₃O₈ | 5 | X | O | 65 |
| Example 2-b | | | 10 | O | O | 62 |
| Example 2-c | | | 25 | O | O | 57 |
| Example 2-d | | | 50 | O | O | 48 |
| Example 2-e | | | 75 | O | O | 44 |
| Example 2-f | | | 95 | O | O | 37 |
| Example 3-a | LiNi_{1/3}C0_{1/3}Mn_{1/3}O₂ | Li₃V₂(PO₄)₃ | 5 | X | X | 60 |
| Example 3-b | | | 10 | X | O | 55 |
| Example 3-c | | | 25 | O | O | 53 |
| Example 3-d | | | 50 | O | O | 48 |
| Example 3-e | | | 75 | O | O | 46 |
| Example 3-f | | | 95 | O | O | 41 |
| Example 4-a | LiNi_{1/3}CO_{1/3}Mn_{1/3}O₂ | LiVOPO₄ | 5 | X | X | 63 |
| Example 4-b | | | 10 | X | O | 60 |
| Example 4-c | | | 25 | O | O | 58 |
| Example 4-d | | | 50 | O | O | 55 |
| Example 4-e | | | 75 | O | O | 50 |
| Example 4-f | | | 95 | O | O | 46 |
| Example 5-a | LiNi_{1/3}Co_{1/3}Mn_{1/3}O₂ | LiVPO₄F | 5 | X | X | 65 |
| Example 5-b | | | 10 | X | X | 61 |
| Example 5-c | | | 25 | O | O | 58 |
| Example 5-d | | | 50 | O | O | 56 |
| Example 5-e | | | 75 | O | O | 48 |
| Example 5-f | | | 95 | O | O | 45 |
| Example 6-a | LiNi_{1/3}CO_{1/3}Mn_{1/3}O₂ | Nb₂O₅ | 5 | X | X | 58 |
| Example 6-b | | | 10 | X | O | 55 |
| Example 6-c | | | 20 | O | O | 53 |
| Example 7-a | LiNi_{1/3}Co_{1/3}Mn_{1/3}O₂ | TiO₂ | 5 | X | X | 55 |
| Example 7-b | | | 10 | O | O | 54 |
| Example 7-c | | | 20 | O | O | 46 |
| Example 8-a | LiNi_{1/3}Co_{1/3}Mn_{1/3}O₂ | Li_{3/4}Ti_{5/3}O₄ | 5 | X | X | 62 |
| Example 8-b | | | 10 | X | O | 58 |
| Example 8-c | | | 20 | O | O | 55 |
| Example 9-a | LiNi_{1/3}Co_{1/3}Mn_{1/3}O₂ | WO₂ | 5 | X | X | 64 |
| Example 9-b | | | 10 | X | O | 61 |
| Example 9-c | | | 20 | O | O | 58 |
| Example 10-a | LiNi_{1/3}CO_{1/3}Mn_{1/3}O₂ | Fe₂O₃ | 5 | X | O | 53 |
| Example 10-b | | | 10 | O | O | 48 |
| Example 10-c | | | 20 | O | O | 45 |
| Comparative Example 1 | LiNi_{1l/3}Co_{1/3}Mn_{1/3}O₂ | - | - | X | X | 70 |

In the Table, O indicates that fire was observed, and X indicates that fire did not break out.

Thus, when lithium nickel cobalt manganese oxide and a lithium ion acceptance capacity adjustment compound are used together as the positive electrode active material, fire caused by overcharging and an internal short-circuit can be suppressed.

Moreover, the temperature of the electric storage device main body is unlikely to rise due to an external short-circuit or the like. As a result, an electric storage device exhibiting a high degree of safety can be realized. The present invention is not limited to the embodiment and examples described above, and may be subjected to various modifications within the scope of the spirit of the invention. For example, the above examples relate to a lithium ion secondary battery formed from an electrode laminated body, but the present invention may also be used to manufacture a wound-type lithium ion secondary battery, or an electrode laminated body-type or wound-type lithium ion capacitor, exhibiting a high degree of safety.

### List of Reference Signs

- 30: battery
- 31: positive electrodes
- 31a: positive electrode composite material layer
- 31b: positive electrode collector
- 31c: through holes
- 32: negative electrodes
- 32a: negative electrode composite material layer
- 32b: negative electrode collector
- 32c: through holes
- 33: separators
- 34: electrode unit
- 36: positive electrode terminal
- 37: negative electrode terminal
- 40: laminate film

## Claims

1. A positive electrode active material containing:
(1) lithium nickel cobalt manganese oxide; and
at least one type of a lithium ion acceptance capacity adjustment compound selected from
(2a) lithium vanadium composite oxide, vanadium oxide, lithium vanadium phosphate, and lithium vanadium fluorophosphate, and
(2b) Nb₂O₅, TiO₂, Li_{3/4}Ti_{5/3}O₄, WO₂, MoO₂, and Fe₂O₃.

2. The material according to claim 1,
wherein the lithium nickel cobalt manganese oxide is an oxide expressed by the chemical formula
LiₐNiₓCo_{y}Mn_{z}O₂
wherein a, x, y, z > 0.

3. The material according to claim 1 or 2,
wherein the lithium ion acceptance capacity adjustment compound represented by (2a) is contained in an amount of 5 % to 95 % by weight, preferably 10 % to 70 % by weight, based on a total weight of the positive electrode active material.

4. The material according to any one of claims 1 to 3,
wherein the lithium ion acceptance capacity adjustment compound represented by (2b) is contained in an amount of 5 % to 20 % by weight, preferably 10 % to 15 % by weight, based on a total weight of the positive electrode active material.

5. A lithium ion electric storage device
comprising the positive electrode active material according to any one of claims 1 to 4.

6. A manufacturing method for a lithium ion electric storage device, comprising the steps of:
- obtaining a positive electrode composite material (31a) by dispersing a mixture containing the positive electrode active material according to any one of claims 1 to 4 and a binder in a solvent;
- coating a positive electrode collector (31b) with the positive electrode composite material (31a); and
- drying the positive electrode composite material.
